# FASCICULE DE BREVET EUROPEEN

(11) **EP 2 192 739 B1**
(45) Date de publication et mention de la délivrance du brevet: **18.04.2018**
(21) Numéro de dépôt: 09174772.5
(22) Date de dépôt: 02.11.2009
(51) Int. Cl.: H04L 29/08, H04L 29/14

(54) **Mécanisme de tolérance aux fautes optimisé pour réseau pair-à-pair**
Optimierter Fehlertoleranzmechanismus für ein Peer-to-Peer-Netz
Optimised fault-tolerance mechanism for a peer-to-peer network

(30) Priorité: 27.11.2008 FR 0858060
(43) Date de publication de la demande: 02.06.2010
(73) Titulaire: Alcatel Lucent, 91620 Nozay (FR)
(72) Inventeur: Tombroff, Dimitri, 91620, NOZAY (FR); Rey, Jean-François, 29228, Brest (FR)
(74) Mandataire: Browne, Robin Forsythe

(56) Documents cités:
- WAUTERS T ET AL: "Distributed replica placement algorithms for peer-to-peer content distribution networks" EUROMICRO CONFERENCE, 2003. PROCEEDINGS. 29TH SEPT 1-6, 2003, PISCATAWAY, NJ, USA,IEEE, 1 septembre 2003 (2003-09-01), pages 181-189, XP010657600 ISBN: 978-0-7695-1996-8
- ZANGRILLI D BRYAN SIPEERIOR TECHNOLOGIES M: "A Chord-based DHT for Resource Lookup in P2PSIP; draft-zangrilli-p2psip-dsip-dhtchord-00.tx t" IETF STANDARD-WORKING-DRAFT, INTERNET ENGINEERING TASK FORCE, IETF, CH, 25 février 2007 (2007-02-25), XP015050614 ISSN: 0000-0004
- SONG YONGCHAO: "RE: [P2PSIP] replication for p2psip" PEER-TO-PEER SIP WORKING GROUP DISCUSSION LIST <P2PSIP.IETF.ORG>, [Online] 5 décembre 2007 (2007-12-05), XP002544083 Extrait de l'Internet: URL:http://www.ietf.org/mail-archive/web/p 2psip/current/msg03496.html> [extrait le 2008-09-02]
- HAIFENG YU ET AL: "Availability of multi-object operations" 3RD SYMPOSIUM ON NETWORKED SYSTEMS DESIGN AND IMPLEMENTATION USENIX ASSOCIATION BERKELEY, CA, USA, 2006, pages 211-224, XP002544084 ISBN: 1-931971-43-9

## Description

La présente invention est relative au déploiement d'un réseau pair-à-pair sur un ensemble d'équipements de traitement. Elle concerne plus particulièrement l'utilisation de ces réseaux pair-à-pair pour des applications de télécommunication.

Il est connu de distribuer certaines applications de télécommunication notamment sur un ensemble de noeuds de traitement. De cette façon, chaque noeud ne traite qu'une partie des requêtes adressées à l'application et il est possible de dimensionner de façon éventuellement dynamique le nombre de noeuds en fonction des ressources nécessaires pour traiter ces requêtes. Une telle architecture permet également de facilement rendre l'application tolérante aux fautes du fait de la redondance inhérente des noeuds entre eux.

Pour certaines applications se pose toutefois le problème de la localisation d'informations contextuelles au sein de cet ensemble de noeuds. En effet, certaines applications comme un élément de signalisation peuvent nécessiter la mémorisation d'un contexte entre deux messages qui lui sont adressés. Ce contexte peut permettre de traiter un message suivant de façon appropriée. C'est le cas d'un élément de signalisation SIP ou « proxy SIP » qui doit traiter une requête en fonction du statut de la session SIP (pour « Session Initiation Protocol »)

Pour ce type d'applications il est nécessaire d'une part de mémoriser ces informations contextuelles mais également de pouvoir les localiser au moment opportun.

Une approche possible consiste à disposer d'une base de données centralisée à laquelle chacun des noeuds a accès et peut mémoriser et récupérer les informations contextuelles des sessions qu'ils gèrent.

Cependant, lorsque cette base de données centralisée est implémentée sur un disque dur ou sur un support matériel équivalent, le temps d'accès aux informations devient pénalisant et rend cette solution inadéquate aux applications demandant des temps de réponse très courts comme les applications de télécommunication.

Implémenter la base de données en mémoire permet de s'affranchir de ce problème du temps d'accès mais la nécessité d'incorporer de la redondance pour répartir la charge des accès et pour satisfaire les contraintes de tolérance aux fautes rend le système complexe. Il s'agit en fait de constituer un réseau de bases distinct de l'ensemble de noeuds de traitement. Outre qu'une telle approche ne semble intellectuellement pas très satisfaisante, elle engendre des problèmes de configuration et n'est ni souple ni aisée à gérer.

Les réseaux pair-à-pair permettent, par l'utilisation d'une table de hachage distribuée, de résoudre ces problèmes d'une façon automatique et transparente pour le développeur de l'application et pour les dispositifs extérieurs à l'application et devant communiquer avec elle.

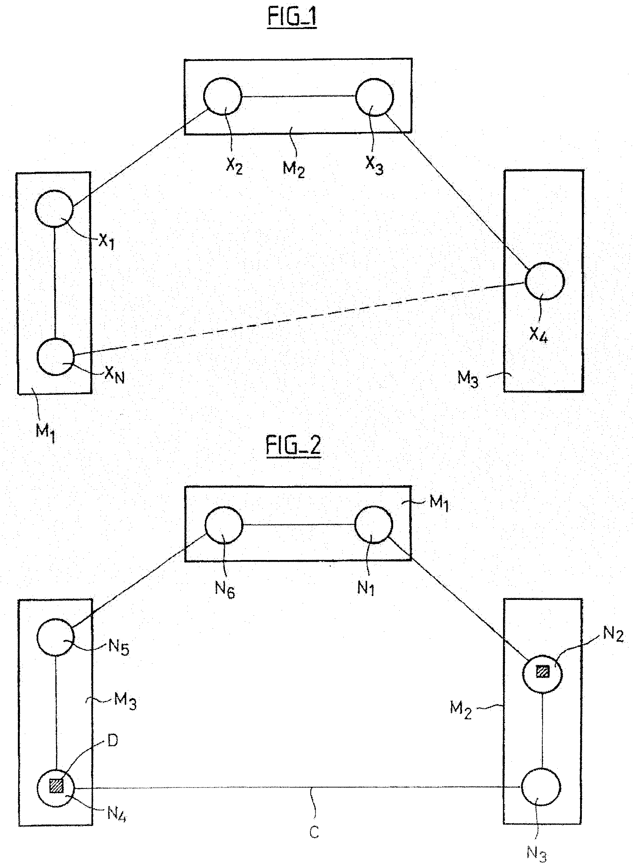

La figure 1 schématise un réseau pair-à-pair composé de N noeuds X1, X2, X3, X4... XN.

Les informations contextuelles à mémoriser sont associées à des clés qui sont distribués sur cet ensemble de noeuds. Généralement, cette distribution est effectuée par une fonction de hachage qui permet de projeter l'espace des clés vers l'espace des noeuds tout en obtenant une bonne répartition de la charge parmi ces noeuds.

Les informations contextuelles peuvent être retrouvées à partir de la clé. L'application de la même fonction de hachage permet de déterminer le noeud associé à cette clé puis de récupérer les informations stockées sur ce noeud et associées à la clé.

Afin de rendre le système tolérant aux fautes, il est généralement prévu que chaque association entre une clé et des informations contextuelles soit répliquée sur un second noeud. De cette façon, si le premier noeud ne fonctionne plus, les informations contextuelles peuvent être récupérées depuis ce second noeud.

Un algorithme simple et communément utilisé pour déterminer quel noeud doit mémoriser la copie des informations contextuelles consiste à choisir le successeur, c'est-à-dire le noeud suivant l'ordre du réseau pair-à-pair. L'intérêt d'un tel choix est qu'en cas de défaillance d'un noeud, la localisation de la copie des informations contextuelles est immédiate. On évite ainsi une période d'incertitude à la suite d'une défaillance, nécessitant une procédure supplémentaire pour correctement gérer cette période sans risquer de répondre de façon erronée à une requête.

Ainsi, si la fonction de hachage appliquée à la clé recherchée désigne le noeud X2 et que celui-ci n'est plus accessible ou ne contient plus l'information à la suite d'un dysfonctionnement, le système détermine automatiquement qu'une copie des informations contextuelles recherchées se trouve dans le noeud X3.

Ces implémentations d'un réseau pair-à-pair sont davantage expliquées dans l'article « Chord: A Scalable Peer-to-peer Lookup Service for Internet Applications » de Ian Stoica, Robert Morris, David Karger, M. Frans Kaashoek et Hari Balakrishnan, ACM SIGCOMM 2001, San Diego, CA, August 2001, pp. 149-160.

Il existe des articles qui exposent des méthodes pour améliorer la tolérence aux fautes dans un réseau « Chord ». Par exemple, l'article « Availability of multi-object operations » de Haifeng Yu, Philip B. Gibbons et Suman Nath propose de s'intéresser à la façon de dupliquer les données dans un tel réseau.

Toutefois, en pratique, le problème technique de la tolérance aux fautes continue de se poser. En effet, les réseaux pair-à-pair sont en pratique déployés sur des réseaux d'équipements de traitement. Ces équipements étant de plus en plus puissants, il est avantageux de déployer plusieurs noeuds sur un même équipement ; autrement de disposer d'un nombre d'équipements de traitement inférieur à celui des noeuds.

Dans l'exemple de la figure 1, les noeuds X2 et X3 sont situés sur l'équipement M2, les noeuds X1 et XN sont situés sur l'équipement M1 et le noeud X4 est situé sur l'équipement M3.

Par conséquent, si un équipement de traitement subit un dysfonctionnement, les noeud présents peuvent être impactés et ne plus fonctionner. Ainsi, si l'équipement de traitement M2 subit une panne, les deux noeuds X2 et X3 ne fonctionnent plus.

Or, selon l'algorithme classique consistant à localiser la copie des informations sur le noeud successeur, les informations mémorisées sur le noeud X2 sont dupliquées sur le noeud X3. Par conséquent, malgré le mécanisme de tolérance aux pannes de l'état de la technique, les informations contextuelles associées au noeud ne sont plus disponibles.

L'état de la technique est donc inadéquat pour procurer une tolérance aux pannes suffisante. Le but de la présente invention est de pallier cette insuffisante en améliorant la gestion d'un réseau pair-à-pair.

Pour ce faire l'invention a pour objet un réseau pair-à-pair composé d'un ensemble de noeuds répartis parmi un ensemble d'équipements de traitement et organisé sous une forme circulaire de sorte que chaque noeud possède un unique noeud successeur, chaque noeud possédant une mémoire pour stocker des données associées à des clés, et, à la réception d'une requête contenant une clé, fournir les données associées à ladite clé, et chaque donnée mémorisée sur un premier noeud étant dupliquée dans la mémoire d'un second noeud, distinct dudit premier noeud.

Ce réseau pair-à-pair se caractérise en ce que le second noeud est choisi parmi les noeuds déployés sur l'ensemble des équipements de traitement distincts de l'équipement de traitement sur lequel est déployé ledit premier noeud.

Selon des mises en oeuvre de l'invention, le second noeud peut être le premier noeud dans ladite forme circulaire qui est déployé sur un équipement de traitement distinct de celui dudit premier noeud.

Au moins un noeud peut posséder une information de synchronisation qui, à la suite de la détection de la sortie du noeud le précédant dans ladite forme circulaire, prend une première valeur, et à la suite d'une phase de resynchronisation des données contenues dans ledit noeud le précédent, prend une seconde valeur, et dans lequel ledit noeud est prévu pour répondre à une requête contenant une clé en fonction de la présence des données associées à cette clé dans sa mémoire et de ladite information de synchronisation.

Ladite donnée peut en outre être dupliquée dans la mémoire de plus d'un noeud dudit réseau.

L'invention apparaîtra de façon plus claire dans la description qui va suivre en liaison avec les figures annexées.
La figure 1, précédemment commentée, schématise un réseau pair-à-pair, conforme à l'état de la technique.
La figure 2 schématise un réseau pair-à-pair déployé sur un ensemble d'équipements de traitement, conformément à l'invention.
La figure 3 illustre un élément de communication selon l'invention.

La figure 2 représente un réseau pair-à-pair déployé sur un réseau constitué de 3 équipements de traitement, M1, M2, M3. Il est constitué d'un ensemble de noeuds N1, N2, N3, N4, N5, N6, organisés sous une forme circulaire C. Chaque noeud possède ainsi un unique noeud successeur et un unique noeud prédécesseur.

Chaque noeud possède une mémoire pour stocker des donnés associées à des clés.

Généralement, une fonction de hachage est associée à l'ensemble du réseau pair-à-pair et permet de déterminer une clé à partir d'une donnée. Les clés permettent quant-à-elles de déterminer un noeud du réseau.

De cette façon pour stocker une nouvelle valeur dans un tel réseau pair-à-pair, il convient d'appliquer la fonction de hachage sur cette valeur afin de déterminer une clé associé, puis d'adresser une requête en stockage au noeud déterminé par cette clé.

Pour retrouver une donnée mémorisée, la clé détermine également directement le noeud qui la contient.

Différentes mises en oeuvre de ces mécanismes existent et sont abondamment décrits dans l'état de la technique. Par exemple, l'article sur Chord, précédemment évoqué, indique une implémentation courante de ces mécanismes.

Chaque donnée est par ailleurs répliquée, c'est-à-dire recopiée dans la mémoire d'un noeud distinct du noeud déterminé par la fonction de hachage. Selon l'invention, ce second noeud est choisi parmi les noeud déployés sur l'ensemble des équipements de traitement distincts de l'équipement de traitement sur lequel est déployé le premier noeud.

Préférentiellement, le second noeud est le noeud immédiatement suivant dans l'ordre de la forme circulaire C qui est déployé sur un équipement de traitement distinct de celui du premier noeud.

Dans l'exemple de la figure 2, l'application de la fonction de hachage sur les données D a permis de déterminer le noeud N2 pour les mémoriser. Ce noeud N2 est déployé sur un équipement de traitement M2.

La forme circulaire C est ordonnée de sorte que le successeur du noeud N2 est le noeud N3. Mais ce noeud N3 est déployé sur le même équipement de traitement M2 que le noeud N2 et ne convient donc pas.

Le noeud immédiatement suivant ce noeud N2 qui est déployé sur un équipement de traitement distinct est le noeud N4. Dans cette mise en oeuvre préférentielle de l'invention, c'est celui-ci qui est donc choisi pour stocker dans sa mémoire les données D dupliquées.

Si l'équipement de traitement M2 devient non-opérationnel, les noeuds N2 et N3 le deviennent également et le réseau pair-à-pair se réorganise parmi les noeud restants N1, N4, N5, N6. Cette phase de réorganisation est bien connue de l'homme du métier et est décrite dans la littérature, notamment dans les articles précédemment évoqués.

Les données D ayant été répliqués sur le noeud N4, elles demeurent présentes au sein du réseau pair-à-pair.

Il en est de même lorsque seul le noeud N2 devient non-opérationnel. Bien que le noeud N3 demeure opérationnel et donc membre du réseau pair-à-pair, les données D sont dupliqués selon la même règle dans la mémoire du noeud N4.

De cette façon une seule règle est uniformément appliquée et, pour retrouver une donnée D mémorisée dans le réseau pair-à-pair, il convient de tout d'abord retrouver, par les mécanismes classiques, le noeud associé à la donnée recherchée, puis de déterminer le noeud immédiatement suivant qui est déployé sur un équipement de traitement distinct.

Lorsqu'un noeud sort du réseau pair-à-pair, par exemple à la suite d'un dysfonctionnement, le réseau se réorganise. Cette phase de réorganisation peut entrainer la redistribution des données mémorisées, et notamment la réplication des données anciennement contenues dans la mémoire du noeud N2 à partir des données dupliquées. Jusqu'à la réorganisation complète des données, le réseau pair-à-pair est dans une phase de resynchronisation.

Le mécanisme de l'invention pose un problème supplémentaire dans la gestion de cette phase de synchronisation

En effet, durant cette phase de synchronisation, le ou les noeuds situés entre celui qui est sorti du réseau pair-à-pair et le noeud le suivant immédiatement et déployé sur un équipement de traitement distinct, n'ont pas une connaissance claire de leur situation.

Dans l'exemple de la figure 2, après la sortie du noeud N2, les requêtes contenant la clé associée à la donnée D aboutissent au noeud N3, par application de la fonction de hachage.

Ce nceud N3 ne possède pas la donnée D dans sa mémoire.

Il est toutefois important qu'il ne réponde pas à la requête par un message signalant que la donnée D n'existe pas.

L'invention comporte donc également un mécanisme permettant de se prémunir d'une réponse hâtive et erronée d'un noeud interrogé.

Il est à noter qu'un mécanisme simple consisterait à systématiquement transmettre la requête au noeud immédiatement suivant. Toutefois, un tel mécanisme serait extrêmement coûteux puisqu'il impliquerait une transmission supplémentaire pour chaque requête pour lequel le noeud ne possède pas la donnée correspondante. Autrement dit, cela implique la transmission inutile d'un message chaque fois qu'une donnée n'est pas présente au sein du réseau pair-à-pair.

Ce mécanisme n'est donc pas acceptable.

Selon une mise en oeuvre de l'invention, le noeud N3 possède une information de synchronisation pouvant prendre deux valeurs.

Lorsque le noeud N3 détecte la sortie du noeud N2 le précédant dans le réseau pair-à-pair, l'information de synchronisation prend une première valeur.

A la suite d'une phase de resynchronisation des données contenues dans le noeud, l'information de synchronisation prend une seconde valeur. Cette phase de resynchronisation des données se déroule durant la phase de réorganisation du réseau qui est déclenchée par la sortie d'un noeud.

Après la phase de réorganisation, les données du noeud N3 se synchronisent sur celles contenues dans le noeud suivant. Ainsi, la donnée D est recopiée depuis le noeud N4 vers le noeud N3. Le noeud N4 conserve la donnée D comme copie redondante.

La réponse du noeud N3 à une requête contenant une clé dépend d'une part de la présence de cette donnée dans la mémoire de ce noeud, et d'autre part de la valeur de l'information de synchronisation.

Si la donnée demandée est dans la mémoire du noeud, celui-ci répond à la requête en fournissant la donnée.

Sinon, si l'information de synchronisation a la première valeur, la requête est transmise au noeud suivant ; et si l'information de synchronisation possède la seconde valeur, le noeud N3 répond par un message indique que la donnée recherchée n'est pas contenue dans le réseau pair-à-pair.

Selon une variante, lorsque l'information de synchronisation possède la première valeur, le noeud N3 attend la fin de la phase de synchronisation. A ce moment là, il répond en fonction de la présence ou non de la donnée demandée dans sa mémoire.

Une autre variante peut consister à répondre à la requête par un message indiquant qu'il ne peut encore répondre et incitant l'émetteur de la requête de réitérer sa requête.

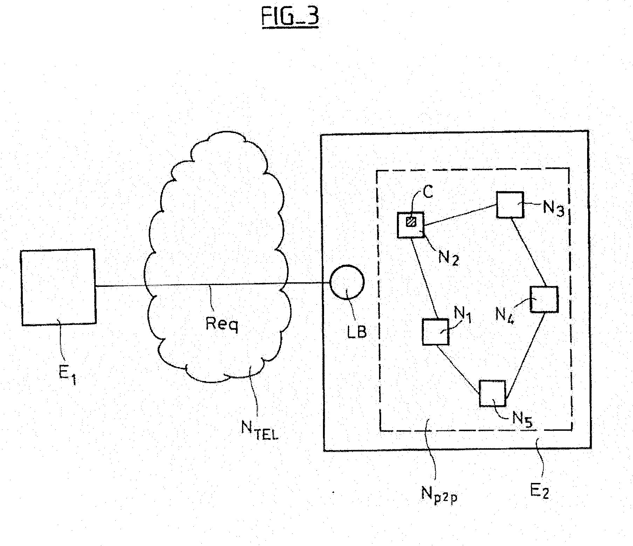

La figure 3 illustre l'application d'un réseau pair-à-pair selon l'invention à un élément de communication. Celui-ci peut être un serveur d'applications dans une architecture de communication, telle une architecture IMS (« *IP Multimédia Subsystem* »). Il peut aussi être un élément de signalisation, tel un proxy conforme au protocole SIP (« *Session Invitation Protocol* ») tel que spécifié par le RFC 3261 de l'IETF, ou une fonction CSCF (« *Call Session Control Function* ») au sein d'une architecture IMS.

Cet élément de communication E₂ possède des moyens de réception d'une requête Req provenant d'un autre élément E₁ à travers un réseau de communication N_{TEL}. La requête Req est traitée par un module de répartition de charge LB, destiné à déterminer, pour chaque première requête d'une session de communication, quel noeud N1, N2, N3. N4, N5 doit traiter la requête. Ces noeuds forment un réseau pair-à-pair Nₚ₂ₚ tel que décrit précédemment.

Le traitement de la requête peut produire la génération d'informations contextuelles qui peuvent être utiles ou nécessaires pour le traitement d'une autre requête appartenant à la même session. Elles sont donc associées à une clé, et mémorisées sur le noeud correspondant à cette clé.

L'association est effectuée par une fonction de hachage appliquée à un identifiant de la session (par exemple, adresses IP de l'élément de communication émetteur E₁, entête « call ID » de la requête SIP, etc.). Le résultat de cette fonction de hachage peut donner directement le numéro du noeud modulo le nombre de noeuds dans le réseau. Ces différents mécanismes sont connus de l'état de la technique et ne sont pas décrits en détail dans cette demande de brevet. L'article précédemment mentionné et concernant le mécanisme « Chord » peut être consulté pour obtenir certains de ces détails.

Dans l'exemple de la figure 3, les informations contextuelles C sont mémorisées dans le noeud N₂. Elles sont dupliquées dans le noeud suivant immédiatement et n'étant pas déployé sur le même équipement de traitement. On suppose qu'il s'agit du noeud N₄.

De cette façon, les prochaines requêtes appartenant à la même session pourront être traitées en récupérant les informations textuelles présentes sur le noeud N₂, et en cas de défaillance de celui-ci, sur le successeur, le noeud N₄.

Les deux N₂ et N₄ n'étant pas sur le même équipement de traitement, la probabilité que ceux-ci sont défaillants simultanément est très faible.

L'invention permet donc de résoudre le problème technique, sans changer fondamentalement les mécanismes connus de gestion du réseau pair-à-pair.

## Revendications

1. Système sur lequel est déployé un réseau pair-à-pair composé d'un ensemble de noeuds (N1, N2, N3, N4, N5, N6), ce système comportant un ensemble d'équipements de traitement (M1, M2, M3), les noeuds du réseau étant répartis parmi lesdits équipements de traitement (M1, M2, M3), ledit réseau étant organisé sous une forme circulaire de sorte que chaque noeud possède un unique noeud successeur, chaque noeud comportant :
- des moyens pour mémoriser des données (D) associées à des clés, de façon que chaque donnée mémorisée dans la mémoire d'un premier noeud est dupliquée dans la mémoire d'un second noeud distinct dudit premier noeud,
et des moyens pour, à la réception d'une requête contenant une clé, fournir les données associées à ladite clé ;
**caractérisé en ce que** au moins un équipement de traitement dudit ensemble d'équipements de traitement est adapté à déployer sur ledit équipemetn plusieurs noeuds ; et **en ce que** lesdits moyens pour mémoriser les données (D) associées à des clés comportant des moyens pour choisir ledit second noeud parmi les noeuds déployés sur l'ensemble des équipements de traitement, et distincts de l'équipement de traitement sur lequel est déployé ledit premier noeud.

2. Système selon la revendication précédente, dans lequel le nombre desdits équipements de traitement est moindre que le nombre desdits noeuds.

3. Système selon l'une des revendications 1 ou 2, dans lequel ledit second noeud est le premier noeud dans ladite forme circulaire qui est déployé sur un équipement de traitement distinct de celui dudit premier noeud.

4. Système selon l'une des revendications précédentes, dans lequel, au moins un noeud possède une information de synchronisation qui, à la suite de la détection de la sortie du noeud le précédant dans ladite forme circulaire, prend une première valeur, et à la suite d'une phase de resynchronisation des données contenues dans ledit noeud le précédent, prend une seconde valeur, et dans lequel ledit noeud est prévu pour répondre à une requête contenant une clé en fonction de la présence des données associées à cette clé dans sa mémoire et de ladite information de synchronisation.

5. Système selon l'une des revendications précédentes, dans lequel ladite donnée est dupliquée dans la mémoire de plus d'un noeud dudit réseau.

## Patentansprüche

1. System in welchem ein Peer-zu-Peer-Netz entwickelt wird, das aus einer Anordnung von Knoten (N1, N2, N3, N4, N5, N6) aufgebaut ist, wobei das System ein Ensemble von Verarbeitungseinheiten (M1, M2, M3) aufweist, wobei die Netzknoten unter den Verarbeitungseinheiten (M1, M2, M3) verteilt sind, wobei das Netz in Form einer kreisförmigen Konfiguration organisiert ist, so dass jeder Knoten einen einzigen Tochterknoten besitzt, wobei jeder Knoten Folgendes aufweist:
- eine Einrichtung zum Speichern von Daten (D), die Schlüsseln zugeordnet sind, und zwar derart, dass die jeweiligen Daten, die in dem Speicher eines ersten Knotens gespeichert sind, in dem Speicher eines zweiten Knotens dupliziert sind, der von dem ersten Knoten verschieden ist; und
- eine Einrichtung, um beim Empfang einer Anfrage, die einen Schlüssel enthält, die Daten zu liefern, die dem Schlüssel zugeordnet sind; **dadurch gekennzeichnet,**
**dass** zumindest eine Verarbeitungseinheit des Ensembles von Verarbeitungseinheiten dazu ausgelegt ist, in der Einrichtung mehrere Knoten zu verteilen;
und **dass** die Einrichtungen zum Speichern der Daten (D), die den Schlüsseln zugeordnet sind, Einrichtungen aufweisen, um den zweiten Knoten unter den Knoten auszuwählen, die in dem Ensemble von Verarbeitungseinheiten verteilt sind, und die verschieden sind von der Verarbeitungseinheit, in der der erste Knoten verteilt ist.

2. System nach dem vorhergehenden Anspruch,
wobei die Anzahl von Verarbeitungseinheiten kleiner ist als die Anzahl von Knoten.

3. System nach einem der Ansprüche 1 oder 2,
wobei der zweite Knoten der erste Knoten in der kreisförmigen Konfiguration ist, der in einer Verarbeitungseinrichtung entwickelt wird, die von dem ersten Knoten verschieden ist.

4. System nach einem der vorhergehenden Ansprüche,
wobei zumindest ein Knoten eine Synchronisationsinformation besitzt, die nach der Detektion des Ausgangs des Knotens, der ihm in der kreisförmigen Konfiguration vorhergeht, einen ersten Wert annimmt und der nach einer Phase der erneuten Synchronisation der Daten, die in dem ihm vorhergehenden Knoten enthalten sind, einen zweiten Wert annimmt, und
wobei der Knoten vorgesehen ist, um auf eine Anfrage zu antworten, die einen Schlüssel in Abhängigkeit von der Anwesenheit der Daten enthält, die diesem Schlüssel in dem Speicher und der Synchronisationsinformation zugeordnet sind.

5. System nach einem der vorhergehenden Ansprüche,
wobei die jeweiligen Daten in dem Speicher von einem weiteren Knoten des Netzes dupliziert sind.

## Claims

1. System in which a peer-to-peer network made up of a set of nodes (N1, N2, N3, N4, N5, N6) is deployed, the system comprising a set of processing equipment (M1, M2, M3), the network nodes being distributed among said processing equipment (M1, M2, M3), the network being organized as a circular-shaped network such that each node has a unique successor node, each node comprising:
means for memorizing data (D) associated with keys, such that each data memorized in the memory of a first node is duplicated in the memory of a second node, distinct from said first node; and
upon receipt of a request containing a key, means for supplying the data associated with said key;
wherein at least one processing equipment of said set of processing equipment is adapted to deploy several nodes over said processing equipment; and
wherein the means for memorizing the data (D) associated with the keys comprise means for selecting said second node from the deployed nodes of the whole set of processing equipment, the latter being distinct from the processing equipment on which the first node is deployed.

2. System according to preceding claim 1, wherein the number of said processing equipment is lower than the number of said nodes.

3. System according to claim 1 or claim 2, wherein said second node is the first node in said circular-shaped network, and is deployed on processing equipment that is distinct from that of said first node.

4. System according to any one of the preceding claims, wherein at least one node has synchronization information which, further to detection of an exit from the preceding node in said circular-shaped network, takes a first value, and further to a resynchronization phase of the data contained within said preceding node, takes a second value, and
wherein said node is configured to respond to a request containing a key, dependent on the presence of data associated with said key stored in its memory and on said synchronization information.

5. System according to any one of the preceding claims, wherein said data is duplicated in the memory of more than one node of said network.
